(19) **Europäisches Patentamt / European Patent Office / Office européen des brevets**

(11) **EP 3 026 961 B1**

(12) **FASCICULE DE BREVET EUROPEEN**

(45) Date de publication et mention de la délivrance du brevet:
**05.08.2020 Bulletin 2020/32**

(51) Int Cl.:
*H04W 36/00* *(2009.01)* *H04W 56/00* *(2009.01)*
*H04W 84/00* *(2009.01)*

(21) Numéro de dépôt: **15196046.5**

(22) Date de dépôt: **24.11.2015**

(54) **PROCÉDÉ ET SYSTÈME DE GESTION DE LA COMPENSATION DOPPLER LORS D'UN CHANGEMENT DE CELLULE DANS UN SYSTÈME DE COMMUNICATION**

**VERFAHREN UND SYSTEM ZUR STEUERUNG DER DOPPLERVERSCHIEBUNG WÄHREND EINEM ZELLENWECHSEL IN EINEM KOMMUNIKATIONSSYSTEM**

**METHOD AND SYSTEM FOR MANAGING DOPPLER COMPENSATION DURING CELL CHANGE IN A COMMUNICATION SYSTEM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2014 FR 1402690**

(43) Date de publication de la demande:
**01.06.2016 Bulletin 2016/22**

(73) Titulaire: **THALES**
**92400 Courbevoie (FR)**

(72) Inventeurs:
• **PANAITOPOL, Dorin**
  **92622 GENNEVILLIERS CEDEX (FR)**
• **ICART, Isabelle**
  **92622 GENNEVILLIERS CEDEX (FR)**
• **PÉRON, Jean-Luc**
  **92622 GENNEVILLIERS CEDEX (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-2013/166640** **US-A1- 2005 020 203**
**US-A1- 2006 223 559**

• **"3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.3.0, 23 septembre 2014 (2014-09-23), pages 1-378, XP050925644,**
• **ERIC M SILVA C ET AL: "Cell search in Long Term Evolution systems: Primary and secondary synchronization", CIRCUITS AND SYSTEMS (LASCAS), 2012 IEEE THIRD LATIN AMERICAN SYMPOSIUM ON, IEEE, 29 février 2012 (2012-02-29), pages 1-4, XP032163022, DOI: 10.1109/LASCAS.2012.6180345 ISBN: 978-1-4673-1207-3**

EP 3 026 961 B1

**Description**

L'invention concerne un procédé et un système pour gérer le transfert ou changement de cellule de communication, plus connu sous le terme anglo-saxon « Handover » pour des dispositifs mobiles UE se déplaçant dans un réseau de communication.

Elle s'applique, par exemple, pour des communications en technologie LTE plus connue sous l'expression anglo-saxonne Long Term Evolution avec des avions commerciaux, pour des trains à grande vitesse ou d'autres plateformes de communication se déplaçant très rapidement.

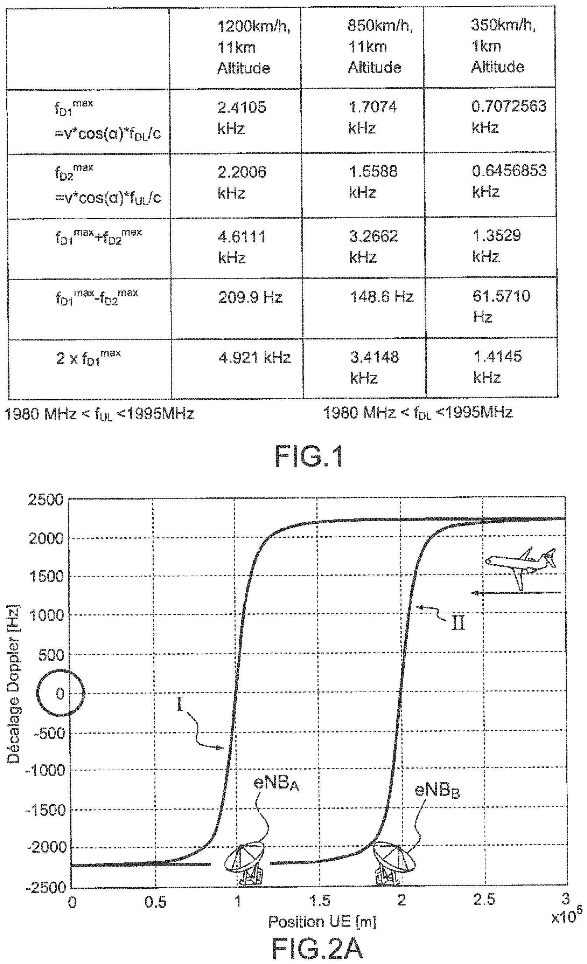

Un utilisateur mobile LTE placé à bord d'un avion, par exemple, doit pouvoir communiquer avec des stations de base LTE situées au sol. Ces dernières contrôlent la communication et fournissent un moyen de connexion au cœur de réseau LTE. Le transfert de flux de données entre les passagers et l'UE est assuré au moyen d'un réseau interne à l'avion, par exemple un réseau WiFi. Lorsque l'aéronef se déplace avec une très grande vitesse, les signaux reçus/transmis par l'utilisateur mobile UE depuis/vers une station de base sont affectés par des décalages Doppler très nettement supérieurs à ce que peut tolérer le standard LTE, soit environ 900Hz. Si le décalage Doppler est corrigé par rapport à la station de base à laquelle est rattaché l'utilisateur mobile, ou station de base de desserte, ce dernier ne pourra pas bien mesurer le niveau de signal reçu depuis les stations de base voisines car les signaux de référence utilisés pour cette mesure sont affectés d'un décalage Doppler relatif trop important. La station de base de desserte, qui se base sur ces mesures pour le choix de la nouvelle cellule cible, en vue d'un changement de cellule, ou « Handover », ne pourra donc pas prendre la bonne décision de changement de cellule d'affectation au bon moment et la qualité de service risque d'être dégradée, ce qui peut se traduire par une coupure de communication plus ou moins longue. Le tableau 1 de la figure 1 présente quelques exemples de décalage Doppler, où v est la vitesse de l'utilisateur mobile et $\alpha$ l'angle entre la direction du vecteur vitesse de l'équipement mobile et l'axe UE-cellule de base de desserte, avec les hypothèses suivantes :

- Une largeur de 100 kms entre deux cellules,
- Une fréquence descendante $f_{DL}$ ou fréquence de la liaison aller, (également connue sous les termes anglo-saxons, de, « DownLink » et « Forward Link », respectivement) de 2182, dans la bande 2170-2185 MHz,
- Une fréquence montante $f_{UL}$ ou fréquence de la liaison de retour (également connue sous l'abréviation anglo-saxonne « Uplink », et « Reverse Link ») de 1992,5 MHz, dans la bande 1980-1995 MHz, ce qui conduit à des valeurs différentes pour fD1max et fD2max.

Dans le document intitulé « Analytical Link Performance Evaluation of LTE Downlink with Carrier Frequency Offset" de QI Wang and Markus Rupp, ASILOMAR 2011, on montre qu'un décalage de fréquence porteuse de 1,5 KHz, soit 10% de la valeur de l'espace inter-sous-porteuses prévu dans LTE, peut réduire le rapport signal sur bruit plus interférence, ou SINR, de plus de 30 dB. La puissance reçue à partir de la station de base de desserte ou d'une station de base voisine, et mesurée au niveau d'un utilisateur mobile peut donc être inexacte si le décalage ou l'étalement Doppler relatif à la cellule de desserte n'est pas corrigé, ce qui justifie la nécessité de trouver de nouvelles solutions. Ce document montre les effets du décalage fréquentiel mais n'offre pas de solution pour pré-compenser l'effet Doppler.

Le brevet EP 2360967 divulgue un procédé dans lequel la consigne de compensation de décalage Doppler liaison montante UL/ liaison descendante DL est calculée durant la communication grâce à la connaissance de la position et de la vitesse de l'utilisateur mobile et de la position de la station de base de desserte. Le changement de cellule est géré par une méthode qui calcule, à partir de la position de l'utilisateur mobile, de la position des différentes stations dans le voisinage, et d'un modèle de propagation, la puissance qui devrait être théoriquement reçue par l'utilisateur mobile de la part des cellules voisines. Le rapport de mesures ainsi calculé est envoyé vers la station de base en lieu et place du rapport de mesures réalisé par la pile de l'utilisateur mobile sur le signal radio descendant. La solution, malgré son efficacité, présente comme inconvénient d'être intrusive au niveau de la pile protocolaire LTE pour la partie Handover, au niveau du remplacement des messages de contrôle ressource radio ou RRC par de « faux » messages de mesure fournis par un bloc de traitement extérieur à la pile, appelé « measurement component ». La solution décrite se base sur une estimation du niveau de signal reçu de la part d'une ou de plusieurs cellules voisines utilisant une base de données de stations de base et des informations de position fournies par un dispositif de localisation GPS, ou satellite, et d'un modèle de propagation (par exemple, propagation en espace libre). Le niveau de signal estimé n'est pas représentatif de la réalité et ne tient notamment pas compte de phénomènes liés à l'environnement, tels que le masquage des signaux par des obstacles, les multi-trajets, etc.

Le document WO 2013/166640 concerne un procédé et un système de gestion de mobilité et de changement de cellule des utilisateurs.

La demande de brevet US 2005/0020203 décrit une méthode permettant de choisir la taille des cellules en fonction de la vitesse des mobiles afin d'éviter des phénomènes d'interruption.

L'état de l'art décrit comment compenser le Doppler par rapport à la cellule de desserte pour améliorer la communication avec la cellule de desserte, mais ne permet pas de compenser (et en utilisant une seule chaine de communication) le Doppler par rapport à une cellule voisine pour mesurer avec précision ou pour améliorer la mesure d'une cellule voisine.

Dans la suite de la description une « cellule de base voisine » à la cellule de desserte, est une cellule de base qui se trouve dans le voisinage de la cellule de base de desserte. La cellule de base de desserte connaît les cellules dans son voisinage proches ou lointaines et avant la procédure de Handover, elle peut envoyer au mobile UE une liste indiquant les cellules voisines, ce qui simplifie la procédure de handover, bien que cela ne soit pas forcément nécessaire. Les mesures faites par l'UE sont utilisées pour la décision de Handover réalisée par la station de desserte, d'où l'intérêt pour la station de base de desserte de bien connaître ses voisins.

UE désigne un équipement mobile se déplaçant à très grande vitesse, supérieure à la valeur de vitesse tolérée par la norme LTE dans la bande de fréquence considérée et eNB (eNode) désigne une station de base. La voie montante désigne une communication de l'équipement mobile vers la station de base, et la voie descendante une communication de la station de base vers l'équipement mobile. L'expression « vitesse tolérée » correspond à une vitesse requise par la norme pour tester un système LTE, les paramètres système pour effectuer les tests étant connus de l'homme du métier (e.g. voir le document TS 36.104).

Le mot « Doppler » englobe dans cette description « l'étalement Doppler » ou bien le « décalage Doppler ». En général, par effet Doppler, on désigne le décalage de fréquence d'une onde (mécanique, acoustique, électromagnétique, etc.), entre la mesure à l'émission et la mesure à la réception lorsque la distance entre un émetteur et un récepteur varie au cours du temps. En télécommunication, on considère que les signaux voyageant le long de chemins ou parcours différents peuvent avoir des décalages Doppler différents, correspondant à des vitesses de changement en phase. La différence de décalages Doppler entre les différentes composantes de signaux qui contribuent à un seul trajet est connue comme étalement Doppler. Dans le cas d'un canal air-sol A2G, on a en général un seul trajet principal, car un aéronef se trouve en vue directe ou LOS (Line-Of-Sight) de la station de base, alors c'est le décalage Doppler qui prédomine.

Le procédé et le système selon l'invention reposent sur une nouvelle approche pour déterminer des valeurs de compensation Doppler à appliquer sur les voies montante et descendante, qui consiste notamment à utiliser les intervalles de mesure prévus par la norme LTE pour appliquer des consignes de compensation Doppler différentes sur les signaux voie descendante provenant de la cellule de desserte et des cellules voisines. Lors du procédé on applique notamment des valeurs de consignes différentes $fd_{DLN}$, $fd_{DLS}$ en fonction de la position temporelle par rapport à l'intervalle de mesure : à l'intérieur ou à l'extérieur d'un intervalle de mesure, comme il va être explicité ci-après.

L'invention concerne un procédé pour gérer la procédure de Handover dans un réseau de communication sans fil, le réseau de communication sans fil comprenant une station de base de desserte et une pluralité de stations de base voisines de la station de base de desserte et au moins une unité de communication mobile UE, l'unité de communication se déplaçant à des vitesses supérieures à une limite de la norme (i.e. le standard LTE (Long Term Evolution) actuel ne permettant pas de dépasser une certaine vitesse sans que la qualité de service ne soit affectée), l'unité de communication comprenant un composant émetteur/récepteur, une unité de compensation d'effet Doppler pour la voie montante UL et une unité de compensation d'effet Doppler pour la voie descendante DL, caractérisé en ce qu'il est utilisé, pour des mesures intra-fréquentielles quand la station de base voisine à mesurer utilise la même fréquence porteuse que celle de la station de base desserte et, pour des mesures inter-fréquentielles quand la station de base voisine à mesurer utilise une fréquence porteuse différente de celle de la cellule de desserte, et en ce qu'il comporte au moins les étapes suivantes :

- Au niveau de l'unité de communication mobile UE, l'unité de compensation d'effet Doppler en émission effectue la précompensation du décalage Doppler sur la voie montante UL, l'unité de compensation d'effet Doppler en réception effectue la compensation du décalage Doppler sur la voie descendante DL, l'unité de gestion mobile d'un utilisateur mobile calcule les valeurs de décalage de fréquence à appliquer de la manière suivante :

  - En générant des intervalles de mesures à partir des informations de configuration relatives aux intervalles de mesure transmises d'une station de base de desserte vers l'unité de communication mobile UE,

  - En calculant une première valeur de décalage de fréquence $fd_{UL,S}$ à appliquer sur le signal émis par l'utilisateur vers la station de base de desserte en voie montante UL pour la station de base de desserte en dehors d'un intervalle de mesure et en calculant une deuxième valeur de décalage de fréquence $fd_{DL,S}$ à appliquer sur le signal reçu par l'utilisateur mobile en voie descendante DL à l'extérieur de l'intervalle de mesure pour la station de base de desserte et une troisième valeur de décalage de fréquence $fd_{DL,N}$ à appliquer sur le signal reçu par l'utilisateur mobile en voie descendante DL à l'intérieur de l'intervalle de mesure pour au moins l'une des stations de base voisine de la station de desserte pour compenser le décalage Doppler,
  - En appliquant les décalages calculés, pour la précompensation du décalage Doppler sur la voie montante UL et pour la compensation du décalage Doppler sur la voie descendante DL.

Selon une variante de réalisation, la station de base de desserte configure le mobile UE avec une liste de cellules à mesurer, le mobile mémorise la liste et il regarde ou mesure en permanence ou périodiquement ou d'une manière évènementielle les cellules voisines afin d'informer la station de base de desserte.

Selon une variante, on génère des intervalles de mesures à partir d'informations issues de la pile protocolaire LTE (Long Term Evolution), telles que l'identifiant de la cellule de desserte, la liste de cellules voisines, le numéro de la cellule de destination, les paramètres de configuration des intervalles de mesures, période de répétition, durée et décalage de l'intervalle de mesure ainsi que des informations de timing (numéro de trame/sous-trame/symbole).

Selon une autre variante, on utilise les signaux de synchronisation primaire PSS et les signaux de synchronisation secondaire SSS afin de synchroniser l'unité de communication mobile avec la station de base de desserte au niveau temporel et aussi au niveau fréquentiel.

Le décalage Doppler à appliquer à l'extérieur de l'intervalle de mesure pour la cellule de desserte est déterminé, par exemple, en utilisant synchronisation PSS/SSS de la cellule de desserte et le décalage Doppler à appliquer à l'intérieur de l'intervalle de mesure pour la cellule voisine est obtenu en utilisant la synchronisation primaire PSS/secondaire SSS de la cellule voisine.

La station de base voisine dont on cherche à corriger le décalage Doppler utilise, par exemple, la même fréquence porteuse que la cellule de desserte.

Le procédé est par exemple appliqué dans un réseau de communication avec une technologie 3GPP ou utilisant un mode de communication en mode duplex avec répartition par fréquence, FDD (Frequency Division Duplex) ou en mode duplex avec répartition temporelle TDD (Time Division Duplexing).

On utilise, par exemple, un point d'accès choisi parmi les technologies suivantes : WiFi, commutateur/Routeur Ethernet, permettant à des utilisateurs présents dans l'unité mobile UE de dialoguer avec l'extérieur.

L'invention concerne aussi un système de communication permettant de gérer la procédure de changement de cellule, ou Handover, comportant au moins une unité de communication mobile UE et un ensemble de stations de base caractérisé en ce que ladite unité de communication mobile comporte un module de gestion de mobilité adapté à exécuter les étapes du procédé selon l'invention.

D'autres caractéristiques et avantages du procédé selon l'invention apparaitront mieux à la lecture de la description qui suit d'exemples donnés à titre illustratif et non limitatif, annexée des figures qui représentent:

- La figure 1, un exemple de décalages Doppler,
- La figure 2A et la figure 2B, une représentation du décalage Doppler et de sa correction,
- La figure 3, une représentation du passage d'une première cellule de communication à une deuxième cellule de communication,
- La figure 4, illustre les notations pour le calcul de compensation Doppler,
- La figure 5, une représentation des intervalles de mesure,
- La figure 6, un exemple d'équipement adapté au niveau d'un terminal mobile pour la mise en œuvre de l'invention, et
- La figure 7, un exemple d'échanges de messages.

La figure 2A représente le décalage Doppler courbe I, courbe II, par rapport à deux stations de base $eNB_A$, $eNB_B$, en fonction de la position d'un utilisateur mobile UE (User Equipment) en prenant comme paramètres de simulation: un utilisateur mobile UE se déplaçant à une vitesse de 1200 km/h, à 10 km d'altitude, une fréquence porteuse de 2 GHz, une distance inter-site de 100 km (i.e. Inter-Site Distance ou ISD).

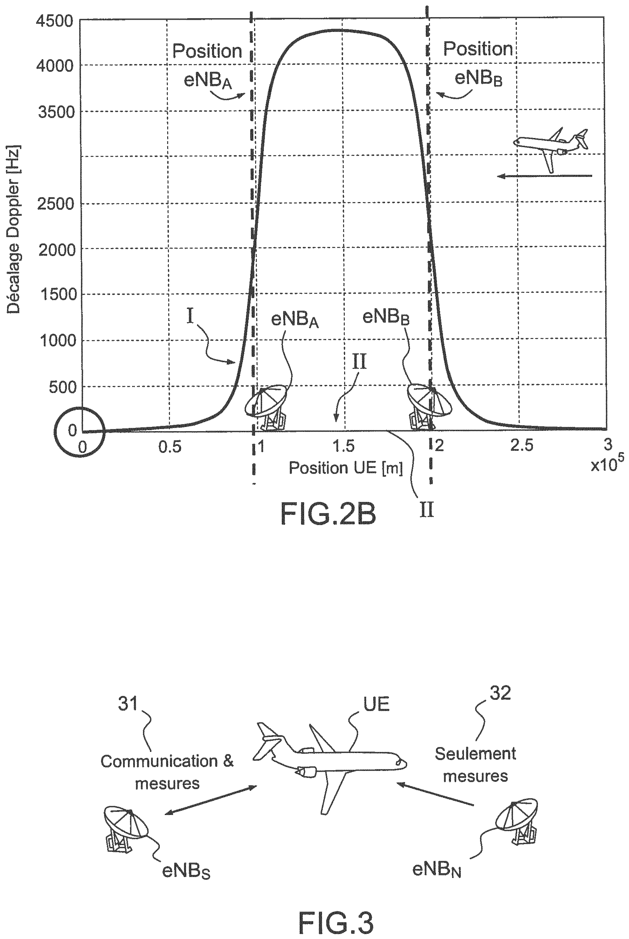

La figure 2B, schématise la correction du décalage Doppler par un utilisateur mobile UE qui corrige le décalage Doppler provenant de la station $eNB_B$, courbe II. La correction prend en compte les paramètres de simulation suivants : un utilisateur mobile UE se déplaçant à une vitesse de 1200 km/h, à 10 km d'altitude, une fréquence porteuse de 2 GHz, une distance inter-site de 100 km (i.e. Inter-Site Distance ou ISD). On constate que le décalage Doppler par rapport à la station $eNB_A$ a augmenté et que si le décalage Doppler est compensé par rapport à la station de base $eNB_B$ (pour pouvoir communiquer avec $eNB_B$), la mesure de la $eNB_A$ sera inexacte et va affecter le HandOver.

La figure 3 schématise le passage d'un avion UE entre une première cellule de desserte avec laquelle l'avion, avec les deux aspects communication et mesure, 31 et une cellule cible potentielle avec un seul aspect, mesure seulement, 32. L'UE mesure et communique avec la cellule de desserte qui représente donc un point d'accès au réseau mobile et, en même temps, l'UE mesure la cellule cible potentielle.

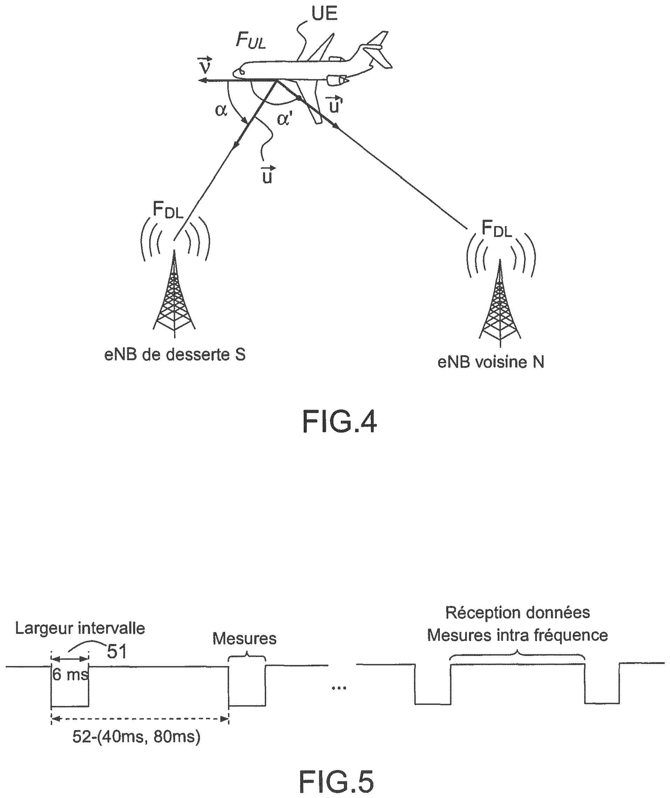

La figure 4 illustre un exemple de notations utilisées pour le calcul de la compensation Doppler, avec :

- $v$ : module du vecteur vitesse de l'UE donné par un GPS, par exemple,
- $\alpha$ : angle entre la direction de déplacement de l'UE, matérialisée par le vecteur unitaire $\vec{v}$ et la direction du vecteur unitaire directeur de l'axe UE-cellule de desserte S, noté $\vec{u}$. Cet angle est calculé à partir de la position de l'UE (informations GPS) et de l'eNB de desserte (base de données de eNB + numéro de la cellule de desserte fourni par la pile LTE UE), par exemple,

- $\alpha'$ : angle entre la direction de déplacement de l'UE, matérialisée par le vecteur unitaire $\vec{v}$ et la direction du vecteur unitaire directeur de l'axe UE-cellule voisine N, noté $\vec{u}'$. Cet angle est calculé à partir de la position de l'UE (informations GPS) et de l'eNB potentiellement cible (base de données de eNB + numéro de la cellule voisine potentiellement cible fourni par la pile LTE UE, par exemple), $\vec{u}'$ permet de déterminer le décalage à appliquer dans l'intervalle,
- $F_{UL}$ : fréquence porteuse utilisée en voie UL,
- $F_{DL}$ : fréquence porteuse utilisée en voie DL.

Sans sortir du cadre de l'invention, on peut avoir un environnement en trois dimensions ou 3D et la cellule voisine peut se trouver après la station de base de desserte, avant ou à côté.

La figure 5, donne une représentation graphique avec des intervalles de mesure, mécanisme connu dans la norme LTE et qui est habituellement utilisé pour permettre à l'unité mobile UE de mesurer des cellules de fréquence différentes. La longueur de l'intervalle de mesure, measurementgap 51 est, par exemple, de 6 ms, la période de répétition de l'intervalle 52 est par exemple de 40 ms, 80ms (spécification technique TS 36.133). Pendant les intervalles de mesure, l'équipement mobile UE ne transmet pas de données et sa fréquence de réception est calée sur la fréquence associée à une cellule voisine, a priori différente de celle de la cellule de desserte. De plus, pour la cellule de desserte, l'utilisateur mobile UE ne transmet pas dans la sous-trame juste après l'intervalle de mesure. Les informations ajoutées dans le paramètre « measurementreport » sont, par exemple, des rapports de puissance RSRP ou en anglo-saxon « Reference Signal Received Power » ou des rapports de qualité RSRQ pour « Reference Signal Received Quality ». Ces informations sont calculées normalement sur les signaux pilotes envoyés par la station de base en voie descendante DL. D'autres informations peuvent être des identifiants de cellules, des évènements ou même des identifiants de mesures. Les indicateurs RSSI abréviation anglo-saxonne de « Received signal Strength Indicator » ne sont pas remontés normalement. Ces informations sont décrites dans la norme TS 36.214, connues de l'homme du métier et ne seront pas détaillées. Les valeurs RSRP et RSRQ sont décrites en TS 36.133 et connues elles aussi de l'homme du métier, 98 valeurs pour RSRP de 0 à 97 et 35 valeurs pour RSRQ de 0 à 33. En norme UMTS on utilise les informations de puissance de code RSCP (Received Signal to Code Power) et Ec/N0 correspondant à l'énergie reçue par chip divisée par la densité de puissance dans la bande de transmission.

| Valeur reportée | Valeur quantité mesurée | Unité |
|---|---|---|
| RSRP_00 | RSRP≤-140 | dBm |
| RSRP_01 | -140≤RSRP<-139 | dBm |
| RSRP_02 | -139≤RSRP<-138 | dBm |
| ....... | ... | ... |
| RSRP_96 | -45≤RSRP<-44 | dBm |
| RSRP_97 | -44≤RSRP | dBm |

| Valeur reportée | Valeur quantité mesurée | Unité |
|---|---|---|
| RSRQ_00 | RSRQ≤-19.5 | dBm |
| RSRQ_01 | -19.5≤RSRQ<-19 | dBm |
| RSRQ_02 | -19≤RSRQ<-18.5 | dBm |
| ....... | ... | ... |
| RSRQ_32 | -4≤RSRQ<-3.5 | dBm |
| RSRQ_33 | -3.5≤RSRQ<-3 | dBm |
| RSRQ_34 | -3≤RSRQ | dBm |

La configuration des intervalles de mesure est faite par la station de base en voie descendante et avant la mesure, la station transmettra cette information à l'UE qui doit savoir où les intervalles de mesure se situent. Par exemple, cette configuration peut se faire de la manière suivante, comme décrit dans TS 36.133 :

```
-- ASN1START
```

```
MeasGapConfig ::= CHOIX {
    release NULL,
    setup SEQUENCE {
        gapOffset CHOIX {
            gp0 ENTIER (0..39),
            gp1 ENTIER (0..79),
        }
    }
}
-- ASN1STOP
```

*MeasGapConfig* est un élément d'information (IE ou Information Element) qui spécifie la configuration des intervalles de mesure et qui contrôle la mise à jour et l'annulation (setup/release) de la configuration d'un ou plusieurs intervalles de mesure.

De plus, la pile LTE UE est capable d'identifier la position exacte des intervalles de mesure. Une fois configurée, elle peut calculer des intervalles de mesure. Le calcul se fait, par exemple, avec la méthode décrite dans le document TS 36.331 ou le mobile peut utiliser l'algorithme suivant.

1> si measGapConfig est positionné à « setup » (mise à jour):

2> si une configuration d'intervalle de mesure a déjà été effectuée précédemment, alors annuler (release) la configuration d'intervalle de mesure,

2> mettre à jour ("setup") la configuration d'intervalle de mesure indiquée par le paramètre "measGapConfig" en accord avec le décalage d'intervalle reçu « gapOffset », i.e., chaque intervalle démarre à un numéro de trame système ou SFN (System Frame Number) et une sous-trame remplissant les conditions suivantes :

SFN mod T = FLOOR(gapOffset/10);

Sous-trame = gapOffset mod 10;

avec T = MGRP/10 comme définie dans TS 36.133;

1> sinon
2> "annuler" la configuration de mesure d'intervalle;".

Le document TS36.133 contient les informations suivantes :

| Identité intervalle | Longueur de l'intervalle MGL, ms | Période de l'intervalle MGRP, ms | Temps minimal disponible et mesure Tinter1, ms | Paramètres |
|---|---|---|---|---|
| 0 | 6 | 40 | 60 | Inter-Fréquence E-UTRAN FDD and TDD, UTRAN FDD, GERAN, LCR TDD, HRPD, |
| 1 | 6 | 80 | 30 | Inter-Frequency E-UTRAN FDD and TDD, UTRAN FDD, GERAN, LCR TDD, HRPD, CDMA2000 1x |

Pendant les intervalles de mesure, l'équipement mobile UE ne transmet pas de données, et son récepteur n'est pas calé sur la fréquence porteuse DL de la cellule de desserte. Par ailleurs, en mode duplex avec répartition par fréquence, FDD (Frequency Division duplex) de LTE, l'équipement mobile UE ne peut pas transmettre dans la sous-trame qui apparaît juste après l'intervalle de mesure.

Les trames et les sous-trames sont prédéfinies au niveau standard 3GPP (TS 36.211) de la manière suivante :

1 trame = 10 sous-trames = 10 ms
1 sous-trame = 2 slots = 1 ms
1 slot = 0.5 ms

Un slot comporte 6 symboles (avec un préfixe cyclique étendu ou « Extended CP », en Anglais) ou 7 symboles (avec un préfixe cyclique normal ou « Normal CP », en Anglais).

Le retard maximum par rapport au début d'une sous-trame est donc de 30 ms maximum.

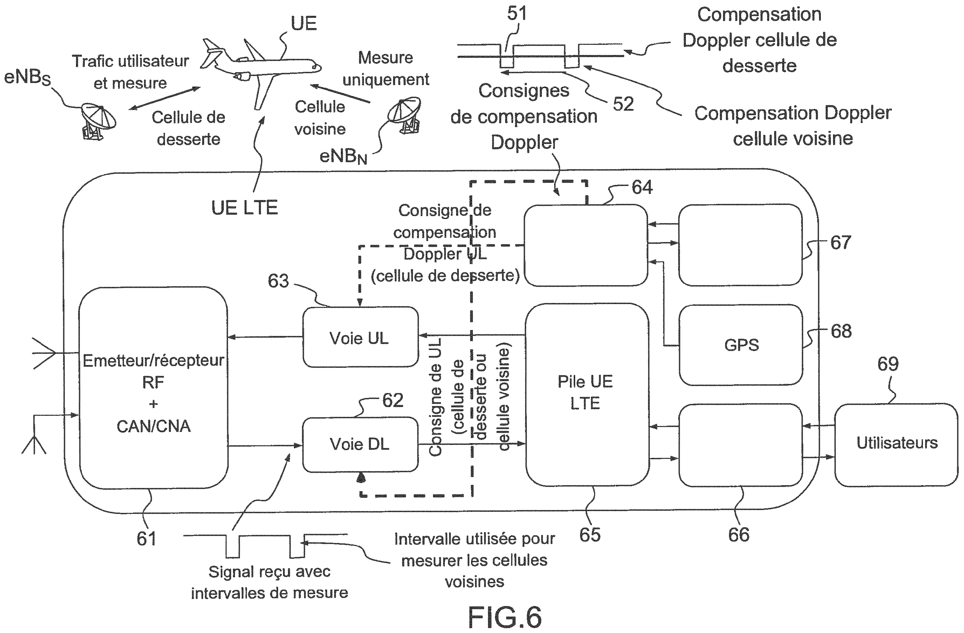

Le procédé selon l'invention va être mis en œuvre dans un équipement mobile adapté aux conditions de mobilité à grande vitesse et comportant notamment les éléments suivants, figure 6 :

- Un émetteur/Récepteur RF, 61, éventuellement avec les convertisseurs analogiques-numériques et numériques-analogiques correspondants CAN/CNA,
- Une unité de compensation Doppler en réception, voie DownLink DL, 62,
- Une unité de pré-compensation Doppler en émission, voie UpLink, UL, 63,
- Une unité de gestion de la mobilité, 64,
- Une pile protocolaire utilisateur mobile, LTE, 65,
- Un commutateur/répéteur Ethernet ou WiFi, 66,
- Une base de données concernant les stations de base du réseau LTE, 67,
- Un système de navigation par satellite de type GPS, 68,
- Un ensemble d'utilisateurs 69 pouvant être connectés grâce au commutateur 66.

L'émetteur/récepteur 61 comporte une voie de réception, qui effectue le filtrage, la transposition en bande de base et la conversion analogique/numérique (CAN) d'un signal radio reçu et une voie d'émission, qui réalise la conversion numérique/analogique (CNA), la transposition à la fréquence radio, l'amplification et le filtrage du signal transmis sur le lien sans fil.

L'unité de compensation Doppler en réception 62 effectue la compensation du décalage Doppler sur la voie descendante DL (sens eNB vers UE, voie DownLink), en décalant la fréquence du signal reçu par l'UE de la valeur de consigne $fd_{DL}$.

L'unité de compensation Doppler en émission 63 effectue la pré-compensation du décalage Doppler sur la voie montante UL (sens UE vers eNB, voie UpLink) en décalant la fréquence du signal transmis par l'UE de la valeur de consigne $fd_{UL}$ de la cellule de desserte ; sachant que si le mobile s'approche d'une station de base, le Doppler est positif et s'il s'en éloigne le Doppler est négatif ; la pré-compensation correspond à un changement de signal de la valeur Doppler en UL, dans le but, i.e. de translater le signal émis dans la bonne bande de fréquence pour faciliter la réception au niveau de la station de base - pour une réception transparente au niveau de la station de base, sans modification supplémentaire de la station de base.

L'unité de gestion de la mobilité réalise le calcul des consignes $fd_{UL}$ et $fd_{DL}$ en temps réel et est connectée aux modules suivants:

- Une base de données de eNB, 67, contenant des informations relatives au déploiement du réseau Air-to-Ground (positions des différentes eNB, taille des cellules, sectorisation...), et éventuellement des autres informations système comme la puissance transmise, les identifiants, les fréquences porteuses,
- Eventuellement un dispositif de navigation satellite, par exemple GPS, 68, fournissant la position et les coordonnées du vecteur vitesse de l'UE, mis à jour en temps réel,
- La pile LTE, 65, dont elle reçoit des informations permettant le calcul des différentes consignes de compensation Doppler, entre autres: l'identifiant de la cellule de desserte, la liste de cellules voisines, numéro de la cellule de destination (commande de HandOver), les paramètres de configuration des intervalles de mesure (période de répétition, durée et offset de l'intervalle de mesure) ainsi que des informations de timing (numéro de trame/sous-trame/symbole courant).

La pile protocolaire 65 est conforme, dans cet exemple, aux spécifications 3GPP LTE, et configurée pour permettre la mise en œuvre des intervalles de mesure prévus dans le standard.

Le commutateur Ethernet ou WiFI, 66, a un rôle de répéteur et achemine le trafic Internet IP en provenance de la pile LTE de l'équipement mobile UE vers les utilisateurs mobiles 69 raccordés à ce serveur de divertissement de bord et dans le sens inverse, le trafic IP des utilisateurs mobiles vers la pile LTE de l'équipement mobile UE.

Les consignes de compensation Doppler à appliquer en voie UL, $fd_{UL}$, et en voie DL, $fd_{DL}$, sont calculées de la manière suivante:

- L'unité de gestion de la mobilité génère des intervalles de mesure en interne, à partir des informations de configuration relatives aux intervalles de mesure ainsi que des informations temporelles ou de « timing » fournies par la pile LTE UE, par exemple, ou d'un dispositif extérieur,
- L'unité de gestion de la mobilité calcule une première valeur de consigne $fd_{UL,S}$ et une deuxième valeur de consigne $fd_{DL,S}$ de correction de décalage Doppler à appliquer respectivement en voie montante UL et en voie descendante DL, en dehors de l'intervalle de mesure, décalage de la fréquence du signal transmis par UE de la valeur de consigne. La lettre S est ici employée pour désigner la cellule de desserte (ou « Serving cell » en Anglais), avec laquelle l'UE communique, en dehors des périodes de mesure. Ces consignes permettent de compenser le décalage Doppler subi par le signal en voie montante et descendante et sont respectivement égales à :

$$fd_{UL,S} = -\frac{v.F_{UL}}{c}.cos(\alpha) \text{ et } fd_{DL,S} = -\frac{v.F_{DL}}{c}.cos(\alpha) \text{ ,}$$

avec les notations suivantes

$v$ : module du vecteur vitesse de l'UE. Il est donné par les informations GPS ou calculé à partir des positions fournies par le système GPS,

$\alpha$ : angle entre la direction de déplacement de l'UE, matérialisée par le vecteur unitaire $\vec{v}$ et la direction du vecteur unitaire directeur de l'axe UE-cellule de desserte S, noté $\vec{u}$, pour la cellule de desserte. Cet angle est calculé à partir de la position de l'UE (informations GPS) et de l'eNB de desserte (base de données de eNB + numéro de la cellule de desserte fourni par la pile LTE UE)

$F_{UL}$ : fréquence porteuse utilisée en voie UL

$F_{DL}$ : fréquence porteuse utilisée en voie DL

c : vitesse de la lumière

- L'unité de gestion de la mobilité calcule aussi une troisième valeur de consigne à appliquer en voie descendante DL, dans l'intervalle de mesure, notée $fd_{DL,N}$, la lettre N est ici employée pour désigner la cellule voisine (ou « Neighbour cell » en Anglais) considérée pour la compensation Doppler durant cette période. A noter qu'aucune consigne de compensation fréquentielle n'est appliquée en voie montante car l'UE est en réception durant l'intervalle de mesure (aucun trafic n'est transmis en voie montante dans cette période temporelle).

Dans l'intervalle de mesure, on va par exemple mesurer la qualité de la cellule voisine, le mot qualité recouvrant, la puissance de la cellule, une valeur de rapport signal à bruit SNR, ou une valeur de rapport signal sur bruit plus interférences ou SINR. Ceci correspond notamment aux paramètres 3GPP, RSRP (Reference Signal Received Power) et RSRQ (Reference Signal Received Quality).

La compensation Doppler correspond à la différence entre la compensation Doppler pour la cellule de desserte et celle de la cellule voisine si la compensation est déjà faite en amont pour la cellule de desserte. On va calculer la troisième valeur à appliquer dans l'intervalle de mesure pour compenser le décalage Doppler lié à une station de base d'une cellule voisine de la station de base desserte $eNB_N$.

Un premier exemple de compensation Doppler est le suivant :

I. L'équipement mobile UE s'approche d'une station de base, le Doppler perçu par rapport à cette station est positif et égal à une valeur $+f_{D2}$ :

a. Sans pré-compensation au niveau du bloc UE 63 (i.e. UE transmet sur la fréquence $f_{UL}$), eNB reçoit le signal sur $f_{UL}+f_{D2}$;

b. Avec pré-compensation au niveau du bloc UE 63 (i.e. UE transmet sur la fréquence $f_{UL}-f_{D2}$) eNB reçoit le signal sur $f_{UL}$.

II. L'équipement mobile UE s'éloigne d'une station de base, le Doppler perçu par rapport à cette station est négatif et égal à une valeur $-f_{D2}$ :

a. Sans pré-compensation au niveau du bloc UE 63 (i.e. UE transmet sur la fréquence $f_{UL}$), eNB reçoit le signal sur $f_{UL}-f_{D2}$;

b. Avec pré-compensation au niveau du bloc UE 63 (i.e. UE transmet sur la fréquence $f_{UL}+f_{D2}$) eNB reçoit le signal sur $f_{UL}$.

Une unité de compensation Doppler en réception 62 - voie DownLink (DL) - depuis la cellule de desserte vers le UE : 62, effectue la compensation du signal réceptionné par l'UE de la valeur de la consigne - $fd_{DL,S}$ de la cellule de desserte; sachant que si le mobile s'approche d'une station de base, le Doppler est positif et s'il s'en éloigne, le Doppler est négatif. La compensation correspond à un changement de signe de la valeur Doppler en DL (avec le but i.e. de translater le signal réceptionné dans la bonne bande de fréquence pour faciliter la réception au niveau d'un UE - pour une interprétation plus transparente de la pile protocolaire d'un UE, et sans une modification supplémentaire de la station de base).

Un deuxième exemple de compensation Doppler est le suivant :

I. L'équipement mobile UE s'approche d'une station de base, le Doppler perçu par rapport à cette station est positif et égal à une valeur $+f_{D1}$ :

    a. Sans compensation au niveau du bloc UE 62, UE reçoit le signal sur $f_{DL}+f_{D1}$ (eNB transmettait sur $f_{DL}$);
    b. Avec compensation au niveau du bloc UE 62, UE reçoit le signal sur $f_{DL}$ (eNB transmettait sur $f_{DL}$).

II. L'équipement mobile UE s'éloigne d'une station de base, le Doppler perçu par rapport à cette station est négatif et égal à une valeur $-f_{D1}$ :

    a. Sans compensation au niveau du bloc UE 62, UE reçoit le signal sur $f_{DL}-f_{D1}$ (eNB transmettait sur $f_{DL}$);
    b. Avec compensation au niveau du bloc UE 62, UE reçoit le signal sur $f_{DL}$ (eNB transmettait sur $f_{DL}$).

Le procédé décrit une compensation Doppler en voie DL qui s'effectue en deux étapes, en utilisant les intervalles de mesures:

    a. A l'extérieur de l'intervalle de mesure, la compensation est effectuée par rapport à la cellule de desserte.
    b. A l'intérieur de l'intervalle de mesure, la compensation est effectuée par rapport à la cellule voisine.

Les deux valeurs que le procédé utilise pour la compensation sont différentes car $\alpha$ et a' sont différents. Les positions relatives d'un équipement mobile UE par rapport à la cellule de desserte et à la cellule voisine sont différentes. De même, les vitesses relatives d'un équipement mobile UE par rapport à la cellule de desserte et à la cellule voisine peuvent être différentes. La station de base voisine peut utiliser une autre fréquence que la station de base de desserte. En plus, le mobile s'éloigne de la cellule de desserte et s'approche de la cellule voisine, alors les signes pour la compensation Doppler sont (normalement) différents. Ce n'est pas une condition, mais ça peut arriver dans certains cas.

Différentes possibilités sont envisageables pour le choix de la fréquence $fd_{DL,N}$, suivant la configuration de l'eNB de desserte, comme indiqué dans le tableau ci-dessous donné à titre d'exemples non limitatifs :

| Alternatives avec des nombres différents de stations de base | Configuration station de base de desserte | Traitement effectué par l'unité de gestion de la mobilité | Avantages |
|---|---|---|---|
| 1 | L'eNB de desserte fournit une liste constituée d'une unique cellule voisine (transmise par la pile UE) | La consigne $fd_{DL,N}$ appliquée par l'unité de gestion de la mobilité dans l'intervalle de mesure est égale à l'inverse du décalage Doppler, voie DL associé à la cellule voisine : $$fd_{DL,N} = -\frac{v.F_{DL}}{c}.\cos(\alpha'),$$ Où $\alpha$ est l'angle entre le vecteur unitaire $\vec{v}$ et la direction du vecteur unitaire directeur de l'axe UE-cellule voisine N, noté $\vec{u'}$ | Calcul simple: une seule valeur de consigne possible |
| 2 | L'eNB fournit une liste constituée de plusieurs cellules voisines (transmise par la pile UE) | Durant l'intervalle de mesure, l'unité de gestion de la mobilité applique une consigne de compensation Doppler, correspondant à l'inverse du décalage Doppler maximum possible en voie DL, soit : $$fd_{DL,N} = -\frac{v.F_{DL}}{c}$$ | Calcul simple. Convient bien pour des cellules de rayon supérieur à 50 kms. |
| 3 | L'eNB fournit une liste constituée de plusieurs cellules | La consigne $fd_{D,N}$ appliquée par l'unité de gestion de la mobilité dans | Le calcul favorise la cellule |

| voisines (transmise par la pile UE) | l'intervalle de mesure est égale à l'inverse du décalage Doppler voie DL associé à la cellule voisine « la plus probable » en tant que cellule de destination (i.e. celle, parmi les cellules voisines, qui a le décalage Doppler relatif voie DL maximal par rapport à la cellule de desserte). $$fd_{DL,N} = -\frac{v.F_{DL}}{c}.cos(\alpha'),$$ Où $\alpha'$ est l'angle entre le vecteur unitaire $\vec{v}$ et la direction du vecteur unitaire $\vec{u}'$ directeur de l'axe UE-cellule voisine N ayant le Doppler relatif maximum par rapport à la cellule de desserte | considérée comme cellule cible la plus probable. Cette méthode convient à tout type de cellule, y compris celles de rayon supérieur à 50 kms |
|---|---|---|

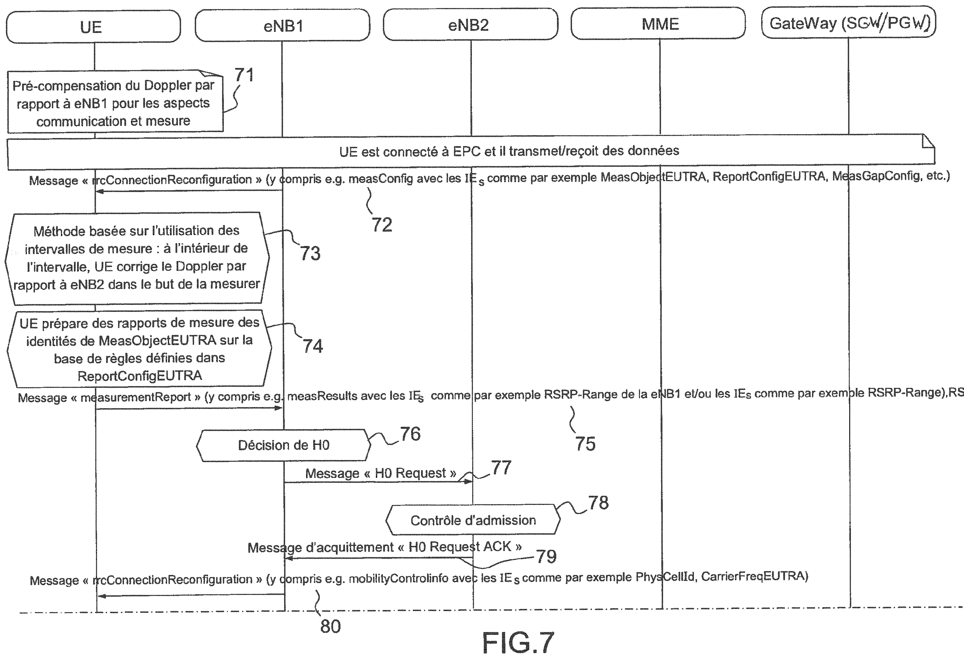

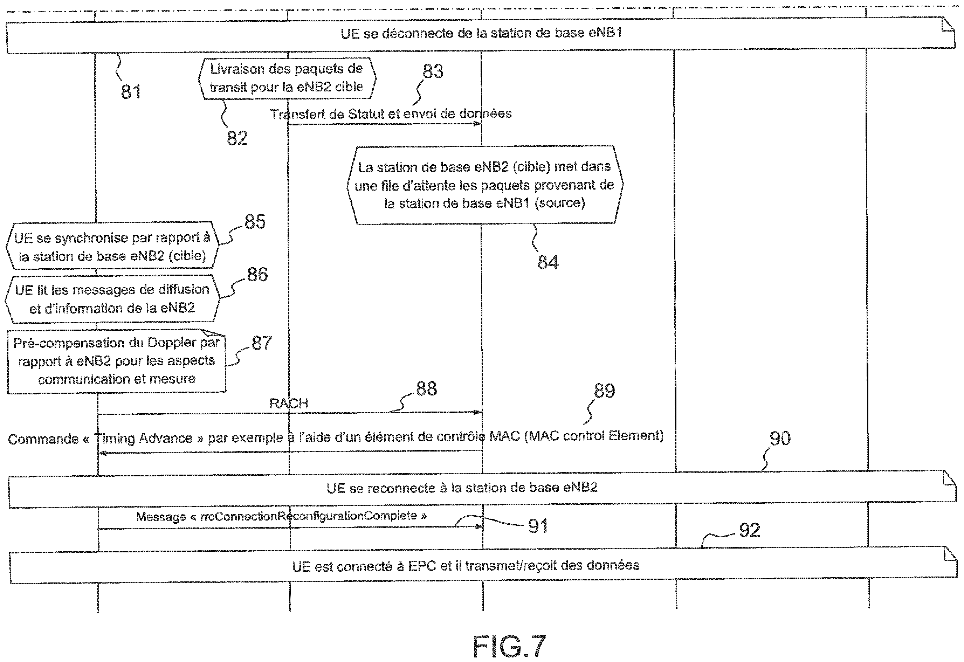

La figure 7 est un schéma représentant les échanges de message et d'informations entre les différents éléments, station de base desserte, station de base visée et l'équipement mobile UE. L'équipement mobile UE effectue une compensation et/ou une pré-compensation 71 du Doppler par rapport à la première station de base de desserte eNB1, l'UE est alors connecté et reçoit (grâce au bloc 62 fig.6) et transmet (grâce au bloc 63 fig.6) des données.

Le message 'rrcConnectionReconfiguration' 72 est un message spécifique 3GPP envoyé sur le canal DCCH (canal logique dédié pour les messages de contrôle) en voie descendante (DL). Ce message contient notamment :

- des informations de configuration envoyées à travers le message 'measConfig' qui contient par exemple des identifiants de cellules à mesurer (dans l'élément d'information IE 'MeasObjectEUTRA'), ou par exemple des critères pour déclencher un rapport de mesure évènementiel ou périodique (dans l'élément d'information IE 'ReportConfigEUTRA') ou encore, par exemple, la configuration des intervalles de mesure (dans l'élément d'information IE 'MeasGapConfig'),
- des informations concernant le Handover HO vers une cellule cible à travers le message 'mobilityControlInfo' (qui contient des informations de type 'PhysCellId' avec l'identifiant physique de la cellule cible ou 'CarrierFreqEUTRA' avec la fréquence porteuse de la cellule cible normalement exprime par une valeur de type ARFCN).

L'UE met en œuvre 73 le procédé selon l'invention basé sur l'utilisation des intervalles de mesure qui permet à l'UE de corriger le Doppler par rapport à la deuxième station eNB2 à l'intérieur de l'intervalle de mesure, afin de mesurer le signal provenant de cette dernière. L'UE détermine le début et la fin de l'intervalle de mesure (ou l'intervalle de mesure, ou tous les intervalles de mesure) et applique à l'aide du bloc 62 une compensation du Doppler à l'intérieur de l'intervalle. L'UE prépare ensuite 74 les rapports de mesure des identités sur la base de règles définies dans la norme. L'UE transmet ensuite un message 'measurementReport', 75, vers la station de base desserte qui va prendre la décision de Handover 76, cette dernière transmettant 77 une requête de Handover HO vers la deuxième station de base eNB2. Cette deuxième station effectue un contrôle d'admission de la requête 78, et transmet un message d'acquittement 79 vers la première station de base desserte, eNB1 transmet ensuite un message 'rrcConnectionReconfigurationComplete' 80 vers l'UE.

Le mobile peut aussi utiliser un ou plusieurs intervalles de mesures pour le calcul de la puissance. Dans ce cas, le mobile peut effectuer une moyenne sur plusieurs valeurs mesurées,i.e., une moyenne de puissance ou de rapport signal/bruit.

Les messages 'measurementReport' et 'rrcConnectionReconfigurationComplete' sont des messages spécifiques 3GPP envoyées sur le canal DCCH (canal logique dédié pour les messages de contrôle) en voie montante (UL).

Dans le 'measurementReport' on trouve des rapports de mesure :

- de la cellule de desserte, i.e. des messages comme le résultat de la mesure en puissance 'rsrpResult' qui contient la valeur de mesure 'RSRP-Range', ou le résultat de la mesure qui exprime comme un rapport de qualité service 'rsrqResult' qui contient la valeur de la mesure 'RSRQ-Range' et potentiellement aussi un identifiant de la mesure 'MeasId' et/ou

- de la cellule cible, i.e. des éléments d'information similaires comme 'RSRP-Range' et 'RSRQ-Range' mais aussi l'identifiant physique de la cellule cible mesurée, exprimé par l'IE 'PhysCellId'.

Le message 'rrcConnectionReconfigurationComplete' signifie une confirmation que le 'rrcConnectionReconfiguration' a été bien effectué.

Les éléments d'information IE (ou 'Information Elements' en Anglais) et les messages de configuration, mesure et de rapport sont décrites en détail dans la référence TS 36.331. Les canaux logiques et l'architecture système LTE sont décrits dans le document TS 36.300.

L'UE se déconnecte, 81, de la première station de base desserte, puis il y a une livraison des paquets de transit pour la eNB2 cible, 82, avec transfert de statut de la première station de base desserte et un envoi de données, 83, vers la deuxième station de base eNB2. La deuxième station de base eNB2 met dans une file d'attente les paquets provenant de la station de base desserte, 84.

L'UE se synchronise 85, par rapport à la deuxième station de base eNB2, puis lit les messages de diffusion et d'information de la deuxième station eNB2, 86, puis va effectuer 87 une compensation (et une pré-compensation) du décalage Doppler par rapport à la deuxième station de base pour les aspects communication et mesure grâce au bloc 62 et 63 (fig.6). L'UE transmet le message RACH, 88, à eNB2, qui retourne une commande d'avance de temps ou « timing advance », 89. L'UE se reconnecte à la station de base eNB2, 90, et transmet le message 'rrcConnectionReconfigurationComplete', 91, l'UE est alors connecté à la deuxième station de base eNB2, 2 et peut transmettre et recevoir des données.

La légende de la figure est la suivante:

UE = User Equipment, utilisateur mobile connecté à eNB1, en train de préparer un HandOver (HO) vers la eNB2.
eNB1= eNodeB1, station de base de desserte ou cellule de desserte ou cellule source
eNB2=eNodeB2, station de base de voisine cible ou cellule voisine cible
UE, eNodeB, EPC (Evolved Packet Core), MME (Mobility Management Entity), SGW (Serving Gateway) et PGW (Packet Data Network Gateway ou PDN-GW) sont des terminologies classiques et connues (au moins) dans la monde 3GPP.
RACH= Random Access Channel, canal utilisé par le UE pendant l'accès initial (ou pendant la procédure de HO car en LTE on utilise une procédure de handover de type « Hard HandOver » c'est-à-dire on coupe la transmission avant de se reconnecter à une nouvelle cellule).

Le procédé peut aussi comporter une étape intermédiaire qui consiste à utiliser des signaux de synchronisation primaire et secondaire PSS/SSS pour se synchroniser au niveau temporel mais aussi au niveau fréquentiel. Cette étape supplémentaire peut servir à déterminer les décalages Doppler par cellule (i.e. au niveau fréquentiel). Pour mettre en œuvre cette variante de réalisation, le procédé ne nécessite pas l'utilisation d'une base de données pour pouvoir compenser les décalages Doppler en fonction d'identifiants correspondants à une ou plusieurs cellules voisines. Dans cette variante le procédé n'est pas assisté par la base de données.

Le procédé selon l'invention s'applique pour le protocole 3GPP quelle que soit sa version. Il peut être mis en œuvre dans tout système de communication qui utilise des intervalles de mesures similaires à ceux de la norme LTE.

Il s'applique pour des communications en mode division de fréquence duplex ou « FDD pour Frequency Division Duplexing », ou encore en mode duplex TDD pour Time Division Duplexing.

Le procédé est utilisé pour des mesures intra-fréquentielles, quand la station de base voisine à mesurer utilise la même fréquence porteuse que celle de la station de base desserte, ou pour des mesures inter-fréquentielles, quand la station de base voisine à mesurer utilise une fréquence porteuse différente de celle de la cellule de desserte.

Le répéteur donné dans le cadre de l'exemple peut être un point d'accès WiFI, ou encore un commutateur/routeur Ethernet, un point d'accès pour une autre technologie non-3GPP comme le WiMAX, le FlashLinQ, et d'autres technologies mobiles de type CDMA, ou une technologie 3GPP comme la technologie précitée LTE, le système de télécommunication universel UMTS (Universal Mobile Télécommunication System), l'accès rapide en mode paquets sur liaison descendante HSPDA (High-Speed Downlink Packet Access), etc....

Sans sortir du cadre de l'invention, le procédé peut s'appliquer dans les applications potentielles suivantes :

- On peut ajouter ou supprimer une cellule à mesurer dans la liste des cellules/stations de base (ou « objets » à mesurer si on utilise le terme utilisé par la norme) à mesurer coté équipement mobile UE, car on peut considérer que la station de base (de desserte) actualise la liste d'une manière plus simple que d'envoyer une liste des cellules/stations (ou « objets ») à mesurer,

- Les compensations peuvent être calculées d'une autre manière et donc les consignes peuvent être avec des signes opposées en fonction de l'interprétation du bloc de compensation. Pour les valeurs de consignes, il est possible d'utiliser $v*\cos(\alpha)*f/c$, ou $v*\cos(\alpha)*f$ (où f représente $f_{UL}$ ou $f_{DL}$, et où la vitesse de la lumière c n'est pas considérée car il s'agit d'une constante), la valeur peut être exprimée en Hz ou en KHz, ou directement en bits.

- Le calcul et/ou l'indication (ou consigne) de compensation peut se faire d'une manière unique, i.e., directement en indiquant une fréquence à appliquer ou peut s'effectuer par rapport à une valeur de référence, i.e., une fréquence porteuse (en DL et/ou UL);

- Le calcul et/ou l'indication (ou consigne) de compensation peut se faire d'une manière incrémentale, par rapport à une valeur précédente (en DL et/ou UL);

- L'indication/la valeur de consigne de compensation peut correspondre à l'écart ou à la différence entre la compensation Doppler pour la cellule de desserte et la compensation Doppler de la cellule voisine, si la compensation est déjà faite en amont pour la cellule de desserte (ou à l'écart ou à la différence entre la compensation Doppler pour la cellule voisine, et celle de la cellule de desserte si la compensation est déjà faite en amont pour la cellule de voisine);

• On peut calculer $\alpha$ et/ou a' à partir des positions GPS (pour l'avion) et de la base données (pour les stations de base) : i.e. $\alpha$ et/ou a' sont obtenues à partir des positions géographiques et actualisées en permanence, périodiquement ou i.e. à une fraction de degré, etc.

Le procédé présente une simplification de la chaîne de réception, car il nécessite en fonctionnement normal un seul récepteur.

La solution proposée par la présente invention n'a pas d'impact sur la pile de la station de base. Toutes les adaptations sont réalisées au niveau de l'utilisateur mobile, à l'extérieur de la pile LTE de l'utilisateur mobile, ce qui ne nécessite pas la revalidation de la pile protocolaire. Le procédé selon l'invention permet de mesurer précisément la puissance en réception de stations de base voisines en présence de décalages Doppler très importants liés à la mobilité à très grande vitesse, grâce à la mise en œuvre d'intervalles de mesure avec une compensation Doppler adéquate. Le procédé garantit la limitation de l'effet potentiel du Doppler au niveau de différentes couches protocolaires, la mesure précise d'une station de base voisine, la réduction du temps de Handover, un Handover précis et réactif, une synchronisation, un accès au canal, une qualité de communication dans les couches supérieures au niveau IP.

Les mesures tiennent compte des phénomènes liés à l'environnement (effets de masquage, en particulier). Le niveau de signal reçu des cellules voisines est directement évalué par la pile UE et renvoyé vers la station de base via les rapports de mesure.

## Revendications

1. Procédé pour gérer une procédure de Handover dans un réseau de communication sans fil, le réseau de communication sans fil comprenant une station de base de desserte et une pluralité de stations de base voisines de la station de base de desserte et au moins une unité de communication mobile UE communiquant avec la station de base de desserte, l'unité de communication se déplaçant à des vitesses supérieures à la limite autorisée dans la norme LTE (Long Term Evolution), l'unité de communication comprenant au moins un composant émetteur/récepteur, une unité de compensation d'effet Doppler pour la voie montante UL et une unité de compensation d'effet Doppler pour la voie descendante DL, le procédé est utilisé pour des mesures intra-fréquentielles quand la station de base voisine à mesurer utilise la même fréquence porteuse que celle de la station de base desserte et pour des mesures inter-fréquentielles quand la station de base voisine à mesurer utilise une fréquence porteuse différente de celle de la cellule de desserte, et en ce qu'il comporte au moins les étapes suivantes :

   • Au niveau de l'unité de communication mobile UE, l'unité de compensation d'effet Doppler en émission effectue la précompensation du décalage Doppler sur la voie montante UL, l'unité de compensation d'effet Doppler en réception effectue la compensation du décalage Doppler sur la voie descendante DL, l'unité de gestion mobile d'un utilisateur mobile calcule les valeurs de décalage de fréquence à appliquer de la manière suivante :

      • En générant des intervalles de mesures à partir des informations de configuration relatives aux intervalles de mesure transmises d'une station de base de desserte vers l'unité de communication mobile UE,
      • En calculant une première valeur de décalage de fréquence $fd_{UL,S}$ à appliquer sur le signal émis par l'utilisateur vers la station de base de desserte en voie montante UL pour la station de base de desserte en dehors d'un intervalle de mesure et en calculant une deuxième valeur de décalage de fréquence $fd_{DL,S}$ à appliquer sur le signal reçu par l'utilisateur mobile en voie descendante DL à l'extérieur de l'intervalle de mesure pour la station de base de desserte et en calculant une troisième valeur de décalage de fréquence $fd_{DL,N}$ à appliquer sur le signal reçu par l'utilisateur mobile en voie descendante DL à l'intérieur de l'intervalle de mesure pour au moins l'une des stations de base voisine de la station de desserte, pour compenser le décalage Doppler.
      • En appliquant les décalages calculés, pour la précompensation du décalage Doppler sur la voie montante UL et pour la compensation du décalage Doppler sur la voie descendante DL.

2. Procédé selon la revendication 1 **caractérisé en ce que** la station de base de desserte configure le mobile UE avec une liste de cellules à mesurer, le mobile mémorise la liste et il regarde ou mesure en permanence ou périodiquement ou d'une manière évènementielle les cellules voisines.

3. Procédé selon l'une des revendications 1 ou 2 **caractérisé en ce que** l'on génère des intervalles de mesures à partir d'informations issues de la pile protocolaire LTE (Long Term Evolution), l'identifiant de la cellule de desserte, la liste de cellules voisines, le numéro de la cellule de destination, les paramètres de configuration des intervalles de mesures, période de répétition, durée et décalage de l'intervalle de mesure ainsi que des informations de timing (numéro de trame/sous-trame/symbole).

4. Procédé selon l'une des revendications 1 à 3 **caractérisé en ce que** l'on utilise les signaux de synchronisation primaire PSS et les signaux de synchronisation secondaire SSS afin de synchroniser l'unité de communication mobile avec la station de base de desserte au niveau temporel et aussi au niveau fréquentiel.

5. Procédé selon la revendication 4 **caractérisé en ce que** l'on détermine le décalage Doppler à appliquer à l'extérieur de l'intervalle de mesure pour la cellule de desserte grâce à la synchronisation primaire PSS/secondaire SSS de la cellule de desserte et on détermine le décalage Doppler à appliquer à l'intérieur de l'intervalle de mesure pour la cellule voisine grâce à la synchronisation PSS/SSS de la cellule voisine.

6. Procédé selon l'une des revendications 1 à 3 **caractérisé en ce que** la station de base voisine dont on cherche à corriger le décalage Doppler utilise la même fréquence porteuse que la cellule de desserte.

7. Procédé selon l'une des revendications 1 à 6 **caractérisé en ce que** le réseau de communication utilise une technologie 3GPP.

8. Procédé selon l'une des revendications 1 à 7 **caractérisé en ce que** le réseau de communication met en œuvre un mode de communication avec répartition par fréquence FDD (Frequency Division Duplex) ou en mode duplex avec répartition temporelle TDD (Time Division Duplexing).

9. Procédé selon l'une des revendications 1 à 8 **caractérisé en ce que** le réseau de communication comprend un point d'accès choisi parmi les technologies suivantes : WiFi, commutateur/Routeur Ethernet.

10. Système de communication permettant de gérer une procédure de Handover comportant au moins une unité de communication mobile UE et un ensemble de stations de base **caractérisé en ce que** ladite unité de communication mobile comporte un module de gestion de mobilité adapté à exécuter les étapes du procédé selon l'une des revendications 1 à 9.

## Patentansprüche

1. Verfahren zum Lenken einer Handover-Prozedur in einem drahtlosen Kommunikationsnetzwerk, wobei das drahtlose Kommunikationsnetzwerk eine bedienende Basisstation und eine Vielzahl von benachbarten Basisstationen der bedienenden Basisstation und mindestens eine mobile Kommunikationseinheit UE beinhaltet, welche mit der bedienenden Basisstation kommuniziert, wobei die Kommunikationseinheit sich bei Geschwindigkeiten bewegt, welche den zulässigen Grenzwert der Norm LTE (Long Term Evolution) überschreiten, wobei die Kommunikationseinheit mindestens eine Sender-/Empfänger-Komponente, eine Dopplereffekt-Kompensationseinheit für den Uplink UL und eine Dopplereffekt-Kompensationseinheit für den Downlink DL beinhaltet, wobei das Verfahren für intrafrequentielle Messungen verwendet wird, wenn die zu messende benachbarte Basisstation dieselbe Trägerfrequenz wie diejenige der bedienenden Basisstation verwendet und für interfrequentielle Messungen, wenn die zu messende benachbarte Basisstation eine von derjenigen der bedienenden Zelle unterschiedliche Trägerfrequenz verwendet, und **dadurch gekennzeichnet, dass** es mindestens folgende Schritte beinhaltet:

• auf Höhe der mobilen Kommunikationseinheit UE führt die Dopplereffekt-Kompensationseinheit im Sendebetrieb die Vorkompensation der Dopplerverschiebung auf dem Uplink UL aus, die Dopplereffekt-Kompensationseinheit im Empfangsbetrieb führt die Vorkompensation der Dopplerverschiebung auf dem Downlinks DL aus, die mobile Lenkungseinheit eines mobilen Nutzers berechnet die anzuwendenden Frequenzverschiebungswerte wie folgt:

• durch Erzeugen von Messintervallen anhand der Konfigurationsinformationen zu den Messintervallen, welche von einer bedienenden Basisstation an die mobile Kommunikationseinheit UE übertragen werden,
• durch Berechnen eines ersten Frequenzverschiebungswertes $fd_{UL,S}$, welcher auf das durch den Bediener für die bedienende Basisstation außerhalb eines Messintervalls an die bedienende Basisstation im Uplink UL gesendete Signal anzuwenden ist, und durch Berechnen eines zweiten Frequenzverschiebungswertes $fd_{DL,S}$, welcher auf das von dem Bediener für die bedienende Basisstation außerhalb des Messintervalls im Downlink DL empfangene Signal anzuwenden ist, durch Berechnen eines Dritten Frequenzverschiebungswertes $fd_{DL,N}$, welcher auf das von dem mobilen Bediener im Downlink DL innerhalb des Messintervalls für mindestens eine der bedienenden Station benachbarte Basisstation empfangene Signal anzuwenden ist, um die Dopplerverschiebung zu kompensieren.
   • durch Anwenden der berechneten Verschiebungen, für die Vorkompensation der Dopplerverschiebung auf dem Uplink UL und für die Kompensation der Dopplerverschiebung auf dem Downlink DL.

2. Verfahren nach Anspruch 1, **dadurch gekennzeichnet, dass** die bedienende Basisstation die mobile Einheit UE mit einer Liste der zu messenden Zellen konfiguriert, die mobile Einheit die Liste speichert und die benachbarten Zellen ständig oder periodisch oder ereignisbezogen in Sicht behält oder misst.

3. Verfahren nach einem der Ansprüche 1 oder 2, **dadurch gekennzeichnet, dass** Messintervalle anhand von aus dem LTE-Protokollstapel (Long Term Evolution) stammenden Informationen, der Kennung der bedienenden Zelle, der Liste benachbarter Zellen, der Nummer der Ziel-Zelle, der Konfigurationsparameter der Messintervalle, der Wiederholungsperiode, der Dauer und der Verschiebung des Messeintervalls sowie der Informationen zum Zeitpunkt (Nummer des Rahmens/Teilrahmens/Symbols) erzeugt werden.

4. Verfahren nach einem der Ansprüche 1 bis 3, **dadurch gekennzeichnet, dass** die primären Synchronisationssignale PSS und die sekundären Synchronisationssignale SSS verwendet werden, um die mobile Kommunikationseinheit mit der bedienenden Basisstation in Bezug auf Zeit und Frequenz zu synchronisieren.

5. Verfahren nach Anspruch 4, **dadurch gekennzeichnet, dass** die außerhalb des Messintervalls für die bedienende Zelle anzuwendende Dopplerverschiebung dank der primären Synchronisation PSS/ sekundären Synchronisation SSS der Bedienenden Zelle ermittelt werden, und die innerhalb des Messintervalls für die benachbarte Zelle anzuwendende Dopplerverschiebung dank der Synchronisation PSS/SSS der benachbarten Zelle ermittelt werden.

6. Verfahren nach einem der Ansprüche 1 bis 3, **dadurch gekennzeichnet, dass** die benachbarte Basisstation, deren Dopplerverschiebung zu korrigieren ist, dieselbe Trägerfrequenz wie die bedienende Zelle verwendet.

7. Verfahren nach einem der Ansprüche 1 bis 6, **dadurch gekennzeichnet, dass** das Kommunikationsnetzwerk eine 3GPP-Technologie verwendet.

8. Verfahren nach einem der Ansprüche 1 bis 7, **dadurch gekennzeichnet, dass** das Kommunikationsnetzwerk einen Kommunikationsmodus mit Frequenzverteilung FDD (Frequency Division Duplex) oder im Duplexmodus mit zeitlicher Verteilung TDD (Time Division Duplexing) umsetzt.

9. Verfahren nach einem der Ansprüche 1 bis 8, **dadurch gekennzeichnet, dass** das Kommunikationsnetzwerk einen unter den folgenden Technologien gewählten Zugangspunkt beinhaltet: WLAN, Switch/Ethernet-Router

10. Kommunikationssystem, welches es ermöglicht, eine Handover-Prozedur zu lenken, beinhaltend mindestens eine mobile Kommunikationseinheit UE und eine Gruppe von Basisstationen, **dadurch gekennzeichnet, dass** die mobile Kommunikationseinheit ein Mobilitätslenkungsmodul beinhaltet, welches geeignet ist, die Schritte des Verfahrens nach einem der Ansprüche 1 bis 9 auszuführen.

**Claims**

1. A method for managing a handover procedure in a wireless communication network, the wireless communication network comprising a serving base station and a plurality of base stations neighbouring the serving base station and at least one mobile communication unit UE communicating with the serving base station, the communication unit moving at speeds above the limit authorised in the LTE (Long Term Evolution) standard, the communication unit comprising at least one transmitter/receiver component, a Doppler effect compensation unit for the uplink UL and a Doppler effect compensation unit for the downlink DL, wherein the method is used for inter-frequency measurements when the neighbouring base station to be measured uses the same carrier frequency as that of the serving base station and for inter-frequency measurements when the neighbouring base station to be measured uses a carrier frequency different from that of the serving cell, and in that it comprises at least the following steps:

   • on the mobile communication unit EU, the Doppler effect compensation unit precompensates during transmission the Doppler shift on the uplink UL, the Doppler effect compensation unit compensates during reception the Doppler shift on the downlink DL, the mobile management unit of a mobile user computes the frequency shift values to be applied as follows:

- by generating measurement intervals from configuration information relating to the measurement intervals transmitted from a serving base station to the mobile communication unit UE;
- by computing a first frequency shift value $fd_{UL,S}$ to be applied to the signal transmitted by the user to the serving base station on the uplink UL for the serving base station outside a measurement interval and computing a second frequency shift value $fd_{DL,S}$ to be applied to the signal received by the mobile user on the downlink DL outside the measurement interval for the serving base station and computing a third frequency shift value $fd_{DL,N}$ to be applied to the signal received by the mobile user on the downlink DL inside the measurement interval for at least one of the neighbouring base stations of the serving station in order to compensate for the Doppler shift;
- by applying the computed shifts for the precompensation of the Doppler shift on the uplink UL and for the compensation of the Doppler shift on the downlink DL.

2. The method according to claim 1, **characterised in that** the serving base station configures the mobile unit UE with a list of cells to be measured, the mobile unit stores the list and it monitors or measures the neighbouring cells permanently or periodically or in an event based manner.

3. The method according to one of claims 1 or 2, **characterised in that** measurement intervals are generated from information originating from the LTE (Long Term Evolution) protocol stack, the identifier of the serving cell, the list of neighbouring cells, the destination cell number, the configuration parameters of the measurement intervals, the repetition period, the measurement interval time and offset, as well as timing information (frame/sub-frame/symbol number).

4. The method according to one of claims 1 to 3, **characterised in that** the primary synchronisation signals PSS and the secondary synchronisation signals SSS are used to synchronise the mobile communication unit with the serving base station at the temporal level and at the frequency level.

5. The method as claimed in claim 4, **characterised in that** the Doppler shift to be applied outside the measurement interval for the serving cell is determined by virtue of the primary PSS/secondary SSS synchronisation of the serving cell and the Doppler shift to be applied inside the measurement interval for the neighbouring cell is determined by virtue of the PSS/SSS synchronisation of the neighbouring cell.

6. The method according to one of claims 1 to 3, **characterised in that** the neighbouring base station with the Doppler shift that is intended to be corrected uses the same carrier frequency as the serving cell.

7. The method according to one of claims 1 to 6, **characterised in that** the communication network uses 3GPP technology.

8. The method according to one of claims 1 to 7, **characterised in that** the communication network implements a communication mode with frequency division FDD (Frequency Division Duplex) or a communication mode in duplex mode with a time division TDD (Time Division Duplexing).

9. The method according to one of claims 1 to 8, **characterised in that** the communication network comprises an access point selected from the following technologies: WiFi, switch/Ethernet router.

10. A communication system for managing a handover procedure comprising at least one mobile communication unit UE and a set of base stations, **characterised in that** said mobile communication unit comprises a mobility management module adapted to execute the steps of the method according to one of claims 1 to 9.

|  | 1200km/h, 11km Altitude | 850km/h, 11km Altitude | 350km/h, 1km Altitude |
|---|---|---|---|
| $f_{D1}^{max}$ $=v*\cos(\alpha)*f_{DL}/c$ | 2.4105 kHz | 1.7074 kHz | 0.7072563 kHz |
| $f_{D2}^{max}$ $=v*\cos(\alpha)*f_{UL}/c$ | 2.2006 kHz | 1.5588 kHz | 0.6456853 kHz |
| $f_{D1}^{max}+f_{D2}^{max}$ | 4.6111 kHz | 3.2662 kHz | 1.3529 kHz |
| $f_{D1}^{max}-f_{D2}^{max}$ | 209.9 Hz | 148.6 Hz | 61.5710 Hz |
| $2 \times f_{D1}^{max}$ | 4.921 kHz | 3.4148 kHz | 1.4145 kHz |

$1980\ MHz < f_{UL} < 1995MHz$        $1980\ MHz < f_{DL} < 1995MHz$

## FIG.1

## FIG.2A

FIG.2B

FIG.3

UE

$F_{UL}$

$\vec{v}$

$\alpha$

$\alpha'$

$\vec{u}$

$\vec{u'}$

$F_{DL}$

$F_{DL}$

eNB de desserte S

eNB voisine N

FIG.4

Largeur intervalle

51

6 ms

Mesures

Réception données
Mesures intra fréquence

...

52-(40ms, 80ms)

FIG.5

FIG.6

| UE | eNB1 | eNB2 | MME | GateWay (SGW/PGW) |

**71** — Pré-compensation du Doppler par rapport à eNB1 pour les aspects communication et mesure

UE est connecté à EPC et il transmet/reçoit des données

Message « rrcConnectionReconfiguration » (y compris e.g. measConfig avec les IE$_S$ comme par exemple MeasObjectEUTRA, ReportConfigEUTRA, MeasGapConfig, etc.)

**72**

**73** — Méthode basée sur l'utilisation des intervalles de mesure : à l'intérieur de l'intervalle, UE corrige le Doppler par rapport à eNB2 dans le but de la mesurer

**74** — UE prépare des rapports de mesure des identités de MeasObjectEUTRA sur la base de règles définies dans ReportConfigEUTRA

Message « measurementReport » (y compris e.g. measResults avec les IE$_S$ comme par exemple RSRP-Range de la eNB1 et/ou les IE$_S$ comme par exemple RSRP-Range),RS

**75**

**76** — Décision de H0

Message « H0 Request » **77**

**78** — Contrôle d'admission

Message d'acquittement « H0 Request ACK » **79**

Message « rrcConnectionReconfiguration » (y compris e.g. mobilityControlInfo avec les IE$_S$ comme par exemple PhysCellId, CarrierFreqEUTRA)

**80**

## FIG.7

EP 3 026 961 B1

UE se déconnecte de la station de base eNB1

81

Livraison des paquets de
transit pour la eNB2 cible

83

82

Transfert de Statut et envoi de données

La station de base eNB2 (cible) met dans
une file d'attente les paquets provenant de
la station de base eNB1 (source)

85

UE se synchronise par rapport à
la station de base eNB2 (cible)

84

86

UE lit les messages de diffusion
et d'information de la eNB2

87

Pré-compensation du Doppler par
rapport à eNB2 pour les aspects
communication et mesure

88

RACH

89

Commande « Timing Advance » par exemple à l'aide d'un élément de contrôle MAC (MAC control Element)

90

UE se reconnecte à la station de base eNB2

Message « rrcConnectionReconfigurationComplete »

91

92

UE est connecté à EPC et il transmet/reçoit des données

FIG.7

EP 3 026 961 B1

**EP 3 026 961 B1**

**Documents brevets cités dans la description**

- EP 2360967 A
- WO 2013166640 A
- US 20050020203 A

**Littérature non-brevet citée dans la description**

- **QI WANG ; MARKUS RUPP.** Analytical Link Performance Evaluation of LTE Downlink with Carrier Frequency Offset. *ASILOMAR,* 2011